# EUROPÄISCHE PATENTANMELDUNG

(11) **EP 1 650 062 A1**
(43) Veröffentlichungstag der Anmeldung: **26.04.2006**
(21) Anmeldenummer: 05022542.4
(22) Anmeldetag: 15.10.2005
(51) Int. Cl.: B60G 17/018, B60T 8/00, B60K 31/00

(54) **Integration eines Fahrzeugmodells mit Echtzeitaktualisierung**

(30) Priorität: 23.10.2004 DE 102004051759
(71) Anmelder: DaimlerChrysler AG, 70567 Stuttgart (DE)
(72) Erfinder: Gehring, Ottmar, 71394 Kernen (DE); Holzmann, Frédéric, 70579 Stuttgart (DE); Paasche, Sascha, Meguro-Ku Tokyo 150-0003 (JP); Schwarzhaupt, Andreas, 76829 Landau (DE); Spiegelberg, Gernot, 71296 Heimsheim (DE); Sulzmann, Armin, 68723 Oftersheim (DE)

(57) **Zusammenfassung**

Die Erfindung betrifft ein Verfahren und ein entsprechendes Steuerungssystem zur Integration eines Fahrzeugmodells in Fahrsystemeinrichtungen. Die Modellparameter können dabei während des Fahrbetriebs je nach eingehenden Sensordaten modifiziert werden. Das so in Echtzeit aktualisierte Modell wird zur Ansteuerung der Fahrzeugkomponenten (7) herangezogen indem Einstellwerte (1) zunächst am Fahrzeugmodell (5, 11) auf ihre Wirkung überprüft und gegebenenfalls korrigiert werden. Erst die auf diese Weise erhaltenen optimierten Steuerbefehle (6) werden an die jeweiligen Fahrzeugkomponenten (7) weitergeleitet.

## Beschreibung

Die Erfindung betrifft ein Verfahren zur Integration eines Fahrzeugmodells in die Steuerungsvorgänge in modernen Fahrsystemeinrichtungen, sowie das entsprechend ausgestaltete Steuerungssystem.

In der Kraftfahrzeugtechnik nehmen adaptive Systemkomponenten in den Bereichen Fahrwerks- und Sicherheitstechnik zu. Entsprechende Steuerungs- und Rechenmodule werden auf der Basis von Fahrzeugmodellen in Computern entwickelt, bevor sie im Fahrzeug eingebaut, getestet und schließlich integriert werden. Diese Systeme beruhen somit üblicherweise auf einem statischen Modell, das einen zuvor festgelegten Idealzustand des Fahrzeugs darstellt.

Steuerungssysteme, die auf Berechnungsverfahren beruhen, bei denen ein statischer Charakter des Fahrzeugmodells zugrunde liegt, können sich in einzelnen Fällen als unzureichend erweisen. Zum Beispiel kann die theoretische Bremsleistung bei einem idealisierten Modell von der tatsächlichen Bremsleistung eines realen Fahrzeugs bei ungünstigen Wetterverhältnissen stark abweichen.

Der Erfindung liegt daher die Aufgabe zugrunde, ein Verfahren und entsprechendes Steuerungssystem zur Integration von Modellen für Steuerungsvorgänge in Fahrzeugen zu entwickeln, das eine flexiblere Anpassung an veränderte Bedingungen gewährleistet.

Diese Aufgabe wird gelöst durch das Verfahren mit den Merkmalen des Anspruchs 1. Weitere vorteilhafte Ausgestaltungen des erfindungsgemäßen Verfahrens sind Gegenstand der Unteransprüche. Das zugeordnete Steuerungssystem ist Gegenstand des Anspruchs 7.

Die Erfindung wird im Folgenden anhand bevorzugter Ausführungsbeispiele unter Bezugnahme auf die Figuren und den darin verwendeten Bezugszeichen beschrieben.

Dabei zeigt:

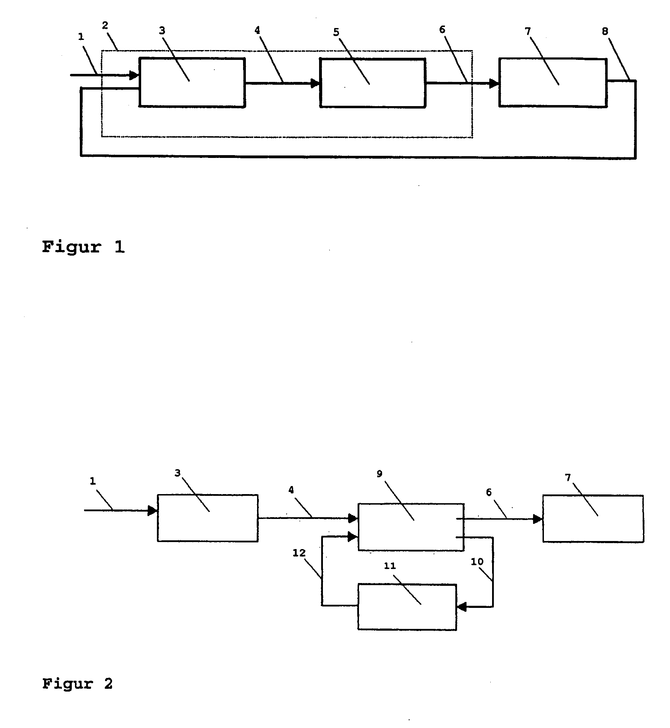

- Fig. 1: ein Ablaufdiagramm für Steuerungsvorgänge bei denen aktuelle Fahrzeugzustandswerte in die Steuerungsstrategie einbezogen werden und dann aus den so bestimmten Einstellvorgaben Mithilfe eines inversen Modells (reaktives Fahrzeugmodell) die optimalen Steuerungswerte berechnet und an die Fahrzeugkomponenten weitergegeben werden.
- Fig. 2: ein Ablaufdiagramm für eine alternative Methode, bei der die Einstellvorgaben der Steuerungsstrategie zunächst anhand des aktualisierten Fahrzeugmodells auf ihre Wirkung getestet werden und erst nach eventueller Anpassung an die Fahrzeugkomponenten weitergegeben werden.

Bei Simulationen zur Entwicklung von Modulen werden die Fahrzeugparameter vorgegeben, d.h. sie sind entweder durch Berechnungen oder durch Wertetabellen festgelegt. Ein so definiertes Modell kann modifiziert werden, indem man lediglich bestimmte Werte ändert. Verändert man z.B. das Fahrzeuggewicht in Abhängigkeit von der mitgeführten Menge an Kraftstoff und der Anzahl der Insassen, so ist es möglich, das Fahrzeugmodell entsprechend anzupassen. Es ist ebenso möglich, die Übertragungsfunktion bestimmter angesteuerter Fahrzeugkomponenten abhängig von ihrer Ansprechleistung anzugeben. Beispielsweise haben Bremssysteme ein dynamisches Ansprechverhalten, das zudem vom Straßenzustand und von der Oberfläche der Bremsscheiben abhängt. Es ist auch möglich, die Ansprechleistung der Bremsen in Bezug auf spezielle Anforderungen des Fahrers zu modellieren, wie etwa die Ansprechzeit und Bremsstärke bei einer Betätigung des Bremspedals. Durch Berechnung einer Übertragungsfunktion der Bremsanlage kann man diese in das Modul integrieren.

Die Erfindung setzt in einem Steuerungssystem statt eines statischen Fahrzeugmodells ein variables Fahrzeugmodell ein, dessen Parameter während des Fahrbetriebs je nach eingehenden Sensordaten modifiziert werden können. Für ein derartig dynamisch veränderbares Fahrzeugmodell muss infolgedessen eine Reihe von Standardeingaben permanent verfügbar sein. Hierzu werden laufend zum einen die Zustandswerte der einzelnen Fahrzeugkomponenten (Sensordaten über Gaspedal, Bremspedal, Lenkrad usw.) erfaßt, zum anderen Daten über die aktuellen Fahrtbedingungen (Geschwindigkeit, Straßenverhältnisse, Witterung usw.). Die Zustandswerte können dabei auf zweierlei Art klassifiziert werden:
- Pseudostatische Zustände: Sie verändern sich nur wenig, es reicht daher aus, ihren aktuellen Zustand anzugeben (z.B. die Batterieleistung).
- Dynamische Zustände: Sie sind durch eine Übertragungsfunktion charakterisiert. Man muss also im Voraus den Typ der Übertragungsfunktion festlegen. Danach genügt es, die einzelnen Parameter anzugeben (Beispiel: Antwort der Batterie auf einen höheren Strombedarf).

Um Aktualisierungen in Echtzeit vorzunehmen ist es also notwendig, bestimmte Sensordaten zu ergänzen. Es müssen beispielsweise zwei Eingaben für jede Bremse hinzugefügt werden, um die Bremse als System mit einer Antwort 1. Ordnung zu modellieren. Mit diesen Vorgaben kann ein kontinuierlich aktualisiertes Fahrzeugmodell erstellt werden, das alle Komponenten dynamisch erfaßt und stets der augenblicklichen Situation bestmöglich angepaßt ist.

Da erfindungsgemäß das Modell in einem Rechnersystem oder auch direkt als Teil der Steuerungseinrichtung im Fahrzeug mitgeführt wird, und so die Möglichkeit besteht, jederzeit Änderungen der Modellparameter vorzunehmen, können auch die danach angesteuerten Komponenten in Echtzeit auf Veränderungen adaptiv reagieren und mit optimalem Effekt arbeiten. So kann beispielsweise eine Bremsanlage bei veränderten Wetterbedingungen variabel reagieren und ABS und ESP zu anderen Zeitpunkten als den Sollwerten eines statischen Modells auslösen.

Das dynamisch angepasste Fahrzeugmodell kann dabei auf verschiedene Weise zur Optimierung der Ansteuerung der Fahrzeugkomponenten eingesetzt werden. Figur 1 zeigt schematisch das Ablaufdiagramm einer ersten Ausführungsform. Das modifizierbare Modell wird hier für die Steuerung in einer Weise eingesetzt, die als "Beobachter durch Umkehrung" bezeichnet werden kann: Zur Verarbeitung eingehender Einstellwerte (1) entwickelt das Steuerungssystem (2) in einer ersten Stufe eine Steuerungsstrategie (3). Aus den daraus resultierenden primären Steuerungswerten (4) werden anschließend Mithilfe eines inversen Modells (5) die optimierten Steuerbefehle (6) berechnet und an die Fahrzeugkomponenten (7) weitergegeben. Die im Fahrbetrieb von Sensoren gelieferten Rückmeldungen stehen dem Steuerungssystem als praktische Ergebnisse (8) für weitere Steuerungsstrategien zur Verfügung. Das Steuerungssystem bearbeitet also die Fahrzeugzustandsparameter und das inverse System kümmert sich um die tatsächliche Durchführung der Anweisungen. Man erhält damit den Fahrzeugzustand quasi wie die Ausgangsanforderung des Steuerungsstrategiemoduls. Das folgende Beispiel kann für ein intelligentes ACC-System angewendet werden: Das Steuerungssystem erhält als Information die aktuelle Entfernung zu anderen Fahrzeugen, sowie die verschiedenen Geschwindigkeiten. Daraus berechnet es eine optimale Fahrzeuggeschwindigkeit. Das inverse Modell gibt daraufhin an, ob mit den Bremsen abgebremst werden soll, ob beschleunigt oder die Motorbremse eingesetzt werden soll, und dies aufgrund des aktualisierten Fahrzeugmodells in optimaler Weise. Diese Ergebnisse werden dann an die entsprechenden Komponenten des Fahrzeugs weitergegeben.

Figur 2 zeigt eine Ausführungsform des erfindungsgemäßen Verfahrens als Modellierungsmethode. Das Steuerungssystem erhält hier wieder zunächst Einstellwerte (1) und entwickelt mittels entsprechender Steuerungsstrategie (3) die primären Steuerungswerte (4). Diese primären Steuerungswerte werden nun zunächst über eine Umwandlungsstufe (9) als Testanweisung (10) an das Fahrzeugmodell (11) übertragen und bewertet, ob das Fahrzeugmodell (11) auf diese Testanweisung mit den gewünschten Sollergebnissen (12) reagiert. Wenn diese Prüfung der Steuerbefehle am Modell positiv verläuft, wird die Anweisung als optimierter Steuerbefehl (6) an die Fahrzeugkomponenten (7) weitergegeben. Eine andere Methode besteht darin, das Fahrzeugmodell (11) zur Ergebniskonvergenz zu benutzen. Dabei werden im Falle abweichender Soll-Ergebnisse (12) variierte Testanweisungen (10) zur erneuten Prüfung an das Modell (11) übertragen. Wenn die Sollergebnisse (12) konvergieren, werden die so optimierten Steuerbefehle an das Fahrzeug (7) gesandt, sonst erfolgt eine Wiederholung.

Natürlich ist es möglich, die in Fig. 1 und 2 dargestellten verschiedenen Ausführungsformen zu kombinieren.

## Patentansprüche

1. Verfahren zur Integration eines Fahrzeugmodells (5, 11) in die Steuerungsvorgänge in Fahrzeugsystemeinrichtungen, wobei Zustandswerte verschiedener Fahrzeugkomponenten erfaßt und zur dynamischen Aktualisierung der Parameter des Fahrzeugmodells (5, 11) herangezogen werden und Einstellwerte (1) Mithilfe des Fahrzeugmodells (5, 11) bearbeitet werden und erst danach als optimierte Steuerbefehle (6) an die zugeordneten Fahrzeugkomponenten (7) zur Ausführung weitergegeben werden.

2. Verfahren nach Anspruch 1,
**dadurch gekennzeichnet,**
**dass** Einstellwerte (1) am Fahrzeugmodell (5, 11) auf ihre Wirkung überprüft und gegebenenfalls korrigiert werden und erst danach als optimierte Steuerbefehle (6) an die zugeordneten Fahrzeugkomponenten (7) zur Ausführung weitergeben werden.

3. Verfahren nach Anspruch 1 oder 2,
**dadurch gekennzeichnet,**
**dass** vom Fahrzeugmodell (5, 11) auf Eingabe der Einstellwerte (1) Soll-Ergebnisse (12) generiert werden.

4. Verfahren nach Anspruch 3,
**dadurch gekennzeichnet,**
**dass** optimierte Steuerbefehle (6) durch Vergleich der Einstellwerte (1) mit den Soll-Ergebnissen (12) generiert und an die zugeordneten Fahrzeugkomponenten (7) zur Ausführung weitergegeben werden.

5. Verfahren nach Anspruch 4,
**dadurch gekennzeichnet,**
**dass** die optimierten Steuerbefehle (6) durch Variation der Einstellwerte (1) bis zur Konvergenz mit den Soll-Ergebnissen (12) des Fahrzeugmodells generiert werden.

6. Verfahren nach Anspruch 1 oder 2,
**dadurch gekennzeichnet,**
**dass** optimierte Steuerbefehle (6) über ein inverses Fahrzeugmodell (5) generiert und an die zugeordneten Fahrzeugkomponenten (7) zur Ausführung weitergegeben werden.

7. Steuerungssystem in Fahrzeugen zur Durchführung eines Verfahrens nach einem der vorangehenden Ansprüche.
